# EUROPÄISCHE PATENTSCHRIFT

(11) **EP 1 650 454 B1**
(45) Veröffentlichungstag und Bekanntmachung des Hinweises auf die Patenterteilung: **09.12.2009**
(21) Anmeldenummer: 04025013.6
(22) Anmeldetag: 21.10.2004
(51) Int. Cl.: F16D 13/64

(54) **Trägerblech für eine Lamelle und Verfahren zu deren Herstellung**
Mounting plate for a clutch disc and process for his production.
Dispositif de fixation d'un disque d'embrayage et procédé pour sa fabrication

(43) Veröffentlichungstag der Anmeldung: 26.04.2006
(73) Patentinhaber: BorgWarner, Inc., Auburn Hills, MI 48326-2872 (US)
(72) Erfinder: Vögele, Richard, 68804 Atlussheim (DE)
(74) Vertreter: Patentanwälte Westphal, Mussgnug & Partner

(56) Entgegenhaltungen:
- EP-A- 0 054 372
- EP-A1- 0 699 845
- US-A- 1 808 511
- US-A- 4 449 621
- US-A- 4 674 616
- US-A- 4 742 948
- US-A- 5 257 687

## Beschreibung

Die Erfindung betrifft ein Trägerblech für eine Lamelle gemäß dem Oberbegriff des Patentanspruchs 1, eine Lamelle gemäß dem Oberbegriff des Patentanspruchs 8, ein Verfahren zur Herstellung eines Trägerblechs gemäß dem Oberbegriff des Patentanspruchs 11 sowie ein Verfahren zur Herstellung einer Lamelle gemäß dem Oberbegriff des Patentanspruchs 12.

Brems- oder Kupplungseinrichtungen weisen eine oder mehrere Reibscheiben mit vorzugsweise im wesentlichen ringförmiger Gestalt auf. Mehrscheiben-Lamellen-Kupplungen basieren auf zwei oder mehr im allgemeinen als Lamellen bezeichneten Reibscheiben. Eine erste Gruppe dieser Lamellen, die sog. Außenlamellen, sind beispielsweise mittels entsprechender Verzahnungen mit einem mit einer ersten Welle, beispielsweise einer Antriebswelle, gekoppelten Außenlamellenträger und eine zweite Gruppe dieser Lamellen, die sog. Innenlamellen, sind mit einem mit einer zweiten Welle, beispielsweise mit einer Abtriebswelle, gekoppelten Innenlamellenträger drehfest verbunden. Die Lamellen der beiden Gruppen greifen wechselseitig, ein Lamellenpaket bildend, ineinander. Hierbei sind Außenlamellen und Innenlamellen in axialer Richtung zueinander begrenzt verschiebbar und dabei paarweise mit deren aneinander grenzenden Stirnflächen in Reibeingriff. Man unterscheidet Lamellen mit und ohne Reibbelag.

Reibscheiben oder Lamellen mit Reibbelag weisen vorzugsweise einen metallischen, ringförmig ausgebildeten Träger auf, welcher auf einer oder auf beiden Stirnflächen einen bspw. aus einem Faserstoff aus organischem oder anorganischem Material gefertigten Reibbelag trägt. Reibscheiben ohne Reibbelag, die sogenannten Stahllamellen, bestehen quasi aus dem Träger allein.

Reibbeläge der vorgenannten Art wurden anfangs einstückig ausgeführt. Da das Fasermaterial in der Regel in Form von Platten vorliegt, aus dem die Reibbeläge ausgeschnitten oder ausgetrennt werden, ergibt sich ein großer nicht zu verwendender Verschnitt.

Um Reibmaterial einzusparen, ist es daher mittlerweile üblich, segmentförmige, insbesondere ringsegmentförmige Reibbelagsegmente aus einem dünnen (Faser-) Material auszuschneiden oder auszustanzen und auf dem Träger zu einem, z. B. ringförmigen, aus vielen in Umfangsrichtung oder ggf. auch in radialer Richtung angeordneten Segmenten bestehenden Reibbelag zusammenzufügen. Unterschiedliche Verfahren mit mehr oder weniger Verschnitt kommen dabei zum Einsatz. Beispielhaft sei auf die Ausführungen in der US 4,260,047, der US 6,019,205, der WO 99/64755 A1 oder der US 6,409,006 B1 hingewiesen.

Bei dem verwendeten metallischen Träger stellt sich grundsätzlich dasselbe Bedürfnis nach Materialeinsparung und damit verbundener Kostenreduktion bei der Herstellung. Die US 4,674,616 schlägt daher in ähnlicher Weise vor, auch den metallischen Träger einer beidseitig mit einem aus einem Fasermaterial bestehenden Reibbelag versehenen Lamelle aus mehreren Ringsegmenten zusammenzufügen. Um eine hinreichende mechanische Stabilität einer derartigen Lamelle mit aus Ringsegmenten zusammengesetztem Träger zu erreichen, weisen die einzelnen Ringsegmente an ihren Enden, an denen sie zusammengefügt werden, formkomplementäre Vorsprünge und Ausnehmungen auf. Darüber hinaus können die Segmente des ebenfalls segmentierten vorzugsweise fasrigen Reibbelags in Umfangsrichtung versetzt zu den Trägersegmenten angeordnet werden.

Obwohl sich diese Ausführung der einen Fasermaterialreibbelag aufweisenden Lamellen dem Grunde nach bewährt hat, ist deren mechanische Stabilität nicht immer ausreichend. Insbesondere Lamellen ohne oder nur mit einseitig angeordnetem Reibbelag können häufig bei Segmentierung des Trägers nicht mit der erforderlichen mechanischen Stabilität hergestellt werden.

Der Erfindung liegt daher die Aufgabe zugrunde, ein segmentiertes Trägerblech für eine Lamelle sowie eine Lamelle mit segmentiertem Träger vorzustellen, welche eine höhere mechanische Stabilität aufweisen. Darüber hinaus soll ein Verfahren zu deren Herstellung bereit gestellt werden.

Diese Aufgabe wird durch ein segmentiertes Trägerblech für eine Lamelle mit den Merkmalen des kennzeichnenden Teils des Patentanspruchs 1, eine Lamelle mit segmentiertem Trägerblech mit den Merkmalen des kennzeichnenden Teils des Patentanspruchs 5, ein Verfahren zur Herstellung eines segmentierten Trägerblechs mit den Merkmalen des kennzeichnenden Teils der Patentansprüche 10 und 13 sowie ein Verfahren zur Herstellung einer Lamelle mit segmentiertem Trägerblech mit den Merkmalen des kennzeichnenden Teils der Patentansprüche 11 und 12 erfindungsgemäß gelöst.

Vorteilhafte Ausführungen und Weiterbildungen der Erfindung sind in den Unteransprüchen angegeben.

Es hat sich herausgestellt, dass die erforderliche mechanische Stabilität einer nach der Lehre der US 4,674,616 oder der US 4, 449, 621 hergestellten Lamelle häufig deshalb nicht erreicht wird, weil die Formkomplementarität der miteinander verbundenen Trägersegmente nicht hinreichend exakt hergestellt werden kann. Dadurch ist zwischen benachbarten Segmenten nicht nur eine Bewegung senkrecht zur Reiboberfläche möglich, sondern es kann auch zu einem Verkippen benachbarter Segmente kommen. Während das Fasermaterial des Reibbelags und die Segmente selber eine hinreichende Festigkeit aufweisen, um Parallelverschiebungen benachbarter Trägersegmente zu verhindern, können die letztgenannten Schwenkbewegungen durch den Reibbelag und die Segmente selber nicht mehr hinreichend aufgefangen werden. Dieses Problem tritt umso mehr bei reibbelaglosen segmentierten Trägern auf, bei denen die mechanische Stabilität allein durch die Fixierung benachbarter Segmente erfolgen muss.

Die Erfindung beruht daher auf der Erkenntnis, dass ein Verkippen benachbarter Trägersegmente verhindert werden muss, um die mechanische Stabilität zu erhöhen.

Erfindungsgemäß ist das segmentierte Trägerblech daher aus mehreren, insbesondere zwei, segmentierten Trägerblechlamellen gebildet. Die Segmente benachbarter Trägerblechlamellen sind dabei vorzugsweise, jedoch nicht zwingend, gegeneinander (vorzugsweise um eine halbe Segmentteilung) versetzt angeordnet. Durch diese Maßnahme wird verhindert, dass benachbarte Segmente innerhalb einer Trägerblechlamelle gegeneinander verdreht werden können, da das (metallische) Material aus dem die Trägerbleche gefertigt sind wesentlich schwerer verbogen werden kann, als das Fasermaterial eines Reibbelags. Das Trägerblech ist daher mechanisch nahezu gleich stabil wie ein einstückig gefertigtes Trägerblech.

Obwohl die Stabilität bis zu einer gewissen Obergrenze mit zunehmender Anzahl von Trägerblechlamellen zunimmt, ist es günstig, das Trägerblech aus nur zwei Trägerblechlamellen zusammenzusetzen, um die Zahl der Fertigungsschritte und damit die Herstellkosten gering zu halten. Die Anzahl der verwendeten Segmente pro Trägerblechlamelle ist grundsätzlich beliebig. Eine ungerade Teilung ist aus Stabilitätsgründen nicht erforderlich. Es empfiehlt sich, mehr als drei Segmente pro Trägerblechlamelle vorzusehen. Die Anzahl der tatsächlich vorgesehenen Segmente wird in der Regel durch die Herstellkosten bestimmt, wobei zum einen die Materialersparnis durch eine größere Anzahl an Segmenten zunimmt, gleichzeitig aber der Fertigungsaufwand aufgrund weiterer Fertigungsschritte steigt.

In besonders vorteilhafter Ausgestaltung der Erfindung ist vorgesehen, dass Segmente benachbarter Trägerblechlamellen mechanisch miteinander verbunden, z.B. verschweißt oder vernietet sind.

Ein Trägerblech lässt sich durch Verkleben in einfacher Weise und damit kostengünstig wie folgt herstellen:

In einem ersten Schritt wird ein metallisches Kaltband einseitig oder beidseitig mit einem elastischen Kleber versehen. Beiz- oder Leimprozesse können entfallen.

Das Aufbringen des Klebers auf das Kaltband hat Vorteile, da aufgrund der geringen Kaltbandbreite eine einfache Bürst- oder Schleifbearbeitung und Kleberrollenauftragung mit anschließender Trocknung vorgenommen werden kann.

In einem zweiten Schritt werden (vorzugsweise identische) Segmente für die Trägerblechlamellen aus dem metallischen Kaltband ausgestanzt.

In einem dritten Schritt wird aus den ausgestanzten Segmenten eine erste Trägerblechlamelle zusammengefügt.

In einem vierten Schritt wird auf einer der Ringseiten der ersten Trägerblechlamelle (aus Symmetrie- und Stabilitätsgründen vorzugsweise um eine halbe Segmentteilung versetzt) aus den ausgestanzten Segmenten eine zweite Trägerblechlamelle zusammengefügt. Ggf. werden jeweils auf einer der freien Ringseiten der zusammengefügten Trägerblechlamellen (wiederum vorzugsweise um eine halbe Segmentteilung versetzt) aus den ausgestanzten Segmenten weitere Trägerblechlamellen zusammengefügt.

Das gesamte Paket aus übereinanderliegend angeordneten Trägerblechlamellen wird in einem fünften Schritt in einem Bonding Prozess verklebt. Anstelle eines Verklebens der Trägerblechlamellen können auch Schweißverfahren zur Anwendung kommen. Insbesondere ist es erfindungsgemäß vorgesehen, die Trägerblechlamellen durch einen Schweißpunkt oder eine Rollenschweißnaht oder eine Raupe miteinander zu verschweißen. Die Schweißlinse oder Schweißraupe sollte möglichst auf der Belagseite oder an der Außen- und/oder Innenkante des Trägerblechs sein.

Anstelle eines Klebe- oder Schweißverfahrens kommen auch sonstige Verfahren in Betracht, mit welchen eine drehfeste Verbindung zwischen benachbarten Trägerblechlamellen herstellbar ist. Erfindungsgemäß ist insbesondere vorgesehen, mittels formkomplementärer Vorsprünge und Ausnehmungen benachbart angeordneter Trägerblechlamellen, beispielsweise in Form, vorzugsweise radial verlaufender, Stege und korrespondierender Nuten, eine drehfeste Verbindung zwischen aneinander grenzenden Trägerblechlamellen herzustellen.

Grundsätzlich kommen auch sonstige drehfest miteinander verbindende und ggf. Reibschluss zwischen benachbarten Trägerblechlamellen erzeugende Mittel in Betracht. Für welche dieser Anordnungen bzw. Verfahren sich der Fachmann im einzelnen entscheiden wird, hängt einerseits von den Kosten und andererseits von den mechanischen Stabilitätsanforderungen an den zu erzeugenden Träger ab.

Um einerseits sicherzustellen, dass die einzelnen Segmente einer Trägerblechlamelle korrekt, also insbesondere formschlüssig und versatzfrei, aneinandergefügt werden und um andererseits eine größtmögliche mechanische Belastbarkeit des Trägerblechs zu erzielen, ist es erfindungsgemäß vorgesehen, dass benachbarte Segmente einer jeweiligen Trägerblechlamelle an deren (im zusammengefügten Zustand) aneinander angrenzenden Enden formkomplementäre Ausnehmungen und Vorsprünge aufweisen, welche ineinander greifen.

Es sei hier ausdrücklich angemerkt, dass die Segmente der einzelnen Trägerlamellen grundsätzlich in der Art ausgebildet sein können, wie die in den in der Beschreibungseinleitung genannten Dokumenten beschriebenen Segmente der Trägerbleche bzw. Reibbeläge.

Um eine drehfeste Verbindung zu einem jeweiligen Außen- oder Innenlamellenträger herstellen zu können, ist erfindungsgemäß vorgesehen, dass die jeweiligen Trägerblechlamellen eine, vorzugsweise korrespondierende, Außen- oder Innenverzahnung aufweisen. Diese Außen- oder Innenverzahnung eignet sich auch dazu, die einzelnen Segmente einer Trägerlamelle beispielsweise in einem Bondwerkzeug exakt zueinander auszurichten, bevor sie, beispielsweise in dem vorstehend beschriebenen Bonding-Prozess, drehfest miteinander verbunden werden.

Obwohl ein Trägerblech der vorstehend beschriebenen Art allein bereits als reibbelagfreie Lamelle fungieren kann (eine derartige Lamelle wird in der Fachsprache allgemein als Stahllamelle bezeichnet), kann auf einer Stirnseite oder auf beiden Stirnseiten des lamellierten und segmentierten Trägerblechs ein, insbesondere aus einem Fasermaterial bestehender, Reibbelag vorgesehen sein.

Dieser Reibbelag kann z.B. wie in den in der Beschreibungseinleitung angegebenen Druckschriften beschrieben segmentiert (und ggf. lamelliert) ausgebildet sein.

Ein Verfahren zur Herstellung einer Lamelle gemäß der Erfindung kann folgende Verfahrensschritte aufweisen:

In einem ersten Schritt kann ein metallisches Kaltband einseitig oder beidseitig mit einem elastischen Kleber versehen werden.

In einem zweiten Schritt werden (vorzugsweise identische) Segmente für die Trägerblechlamellen aus dem metallischen Kaltband ausgestanzt. Diese können eine form- und funktionskomplementäre Verzahnung aufweisen.

In einem dritten Schritt wird aus den ausgestanzten Segmenten eine erste Trägerblechlamelle zusammengefügt. Das Zusammenfügen kann z. B. durch Planieren, eine formkomplementäre Verzahnung und/ oder Schweißen erfolgen.

In einem vierten Schritt wird auf einer der Stirnseiten der ersten Trägerblechlamelle, vorzugsweise um eine halbe Segmentteilung versetzt, aus den ausgestanzten Segmenten eine zweite Trägerblechlamelle zusammengefügt. Je nach Ausführung der Trägerblechsegmente erfolgt das Zusammenfügen z.B. wieder mittels Planieren, eine formkomplementäre Verzahnung oder Verschweißen. Ggf. werden weitere auf einer der freien Stirnseiten der zusammengefügten Trägerblechlamellen (z. B. um eine halbe Segmentteilung) versetzt aus den ausgestanzten Segmenten weitere Trägerblechlamellen zusammengefügt. Auf einer oder beiden freien Ringseiten wird ggf. ein ggf. ebenfalls segmentierter Reibbelag angeordnet.

Die Trägerblechlamellen und ggf. der oder die Reibbeläge werden in einem fünften Schritt in einem Bonding Prozess miteinander verklebt. Danach wird die Stahllamelle poliert.

Die Erfindung wird nunmehr anhand der Zeichnung näher beschrieben. Es zeigen:

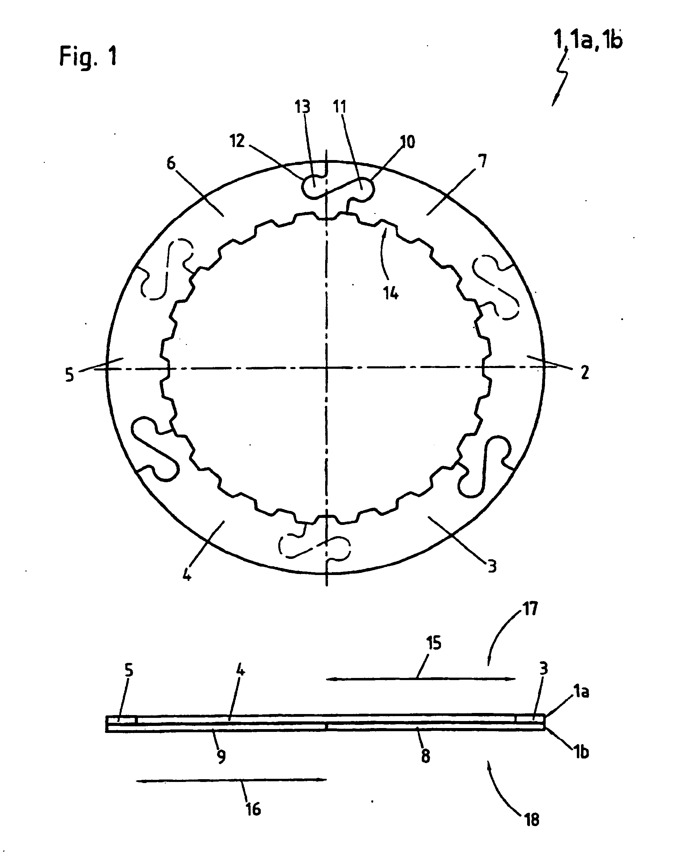

- Fig. 1: ein Trägerblech für eine Reiblamelle bzw. eine reibbelaglose Lamelle.

Die Fig. 1 zeigt ein segmentiertes Trägerblech 1 für eine Reiblamelle mit Reibbelag bzw. eine reibbelaglose Lamelle gemäß der Erfindung.

Das Trägerblech 1 umfasst zwei Trägerblechlamellen, eine erste Trägerblechlamelle 1a und eine zweite Trägerblechlamelle 1b.

Die beiden Trägerblechlamellen 1a und 1b sind weitgehend identisch ausgeführt. Jede Trägerblechlamelle 1a, 1b besteht im vorliegenden Ausführungsbeispiel aus sechs identischen Einzelsegmenten 2, 3, 4, 5, 6, 7 bzw. 8, 9. Jedes Segment 2, 3, 4, 5, 6, 7; 8, 9 umfasst an deren Enden einen Vorsprung 11, 13 und eine Ausnehmung 10, 12. Die Vorsprünge 11, 13 und die Ausnehmungen 10, 12 des fünften und sechsten Segments 6, 7 der ersten Trägerblechlamelle 1a sind in der Zeichnungsfigur 1 exemplarisch mit entsprechenden Bezugszeichen versehen. Ausnehmungen 10, 12 und Vorsprünge benachbarter Segmente 2, 3, 4, 5, 6, 7, 8, 9 sind formkomplementär ausgebildet, sodass die einzelnen Segmente 2 bis 7 sowie 8 bis 9 in einfacher Weise zu einem Ring zusammengesetzt werden können.

Die beispielhaft gezeichnete Trägerblechlamelle 1a weist an ihrem Innenumfang eine Verzahnung 14 auf. Diese Verzahnung 14 ist dazu vorgesehen, das Trägerblech 1 drehfest mit einem (nicht dargestellten) Innenlamellenträger zu verbinden, welcher eine korrespondierende Außenverzahnung aufweist.

Die beiden das Trägerblech 1 bildenden Trägerblechlamellen 1a, 1b sind übereinander angeordnet und drehfest miteinander verbunden. Die einzelnen Segmente 2 bis 7 bzw. 8 und 9 der beiden Trägerblechlamellen 1a, 1b sind dabei versetzt zueinander angeordnet. Vorzugsweise wird hierbei ein Versatz um eine halbe Segmentteilung gewählt. In der Zeichnungsfigur 1 ist der Versatz der einzelnen Segmente 2 bis 7 bzw. 8 und 9 der beiden Trägerblechlamellen 1a, 1b mit Hilfe der Bezugszeichen 15 und 16 gekennzeichnet.

Ohne Reibbelag bildet das in der Figur 1 dargestellte Trägerblech 1 eine reibbelaglose Lamelle. Wie bereits vorstehend im Einzelnen dargelegt wurde, kann das Trägerblech 1 auf einer oder beiden Ringflächen 17, 18 einen aus einem faserigen Material bestehenden Reibbelag tragen. Dann spricht man von einer sogenannten Reiblamelle.

Bezugszeichenliste
- 1: Trägerblech
- 1a: erste Trägerblechlamelle
- 1b: zweite Trägerblechlamelle
- 2: erstes Segment der ersten Trägerblechlamelle
- 3: zweites Segment der ersten Trägerblechlamelle
- 4: drittes Segment der ersten Trägerblechlamelle
- 5: viertes Segment der ersten Trägerblechlamelle
- 6: fünftes Segment der ersten Trägerblechlamelle
- 7: sechstes Segment der ersten Trägerblechlamelle
- 8: erstes Segment der zweiten Trägerblechlamelle
- 9: zweites Segment der zweiten Trägerblechlamelle
- 10: Ausnehmung im sechsten Segment
- 11: Vorsprung am fünften Segment
- 12: Ausnehmung im fünften Segment
- 13: Vorsprung am sechsten Segment
- 14: Innenverzahnung
- 15: Versatz
- 16: Versatz
- 17: erste Ringfläche
- 18: zweite Ringfläche

## Patentansprüche

1. Segmentiertes Trägerblech (1) für eine Lamelle,
**dadurch gekennzeichnet, dass** das Trägerblech (1) aus mehreren, insbesondere zwei, segmentierten Trägerblechlamellen (1a, 1b) gebildet ist, wobei Segmente (2, 3, 4, 5, 6, 7; 8; 9) benachbarter Trägerblechlamellen (1a, 1b) gegeneinander versetzt angeordnet sind, wobei aneinander grenzende Trägerblechlamellen (1a 1b) drehfest miteinander verbunden sind, und wobei die jeweiligen Trägerblechlamellen (1a, 1b) eine Außen- oder Innenverzahnung (14) aufweisen.

2. Segmentiertes Trägerblech (1) nach Anspruch 1,
**dadurch gekennzeichnet, dass** Segmente (2, 3, 4, 5, 6, 7; 8; 9) benachbarter Trägerblechlamellen (1a, 1b) miteinander verklebt sind.

3. Segmentiertes Trägerblech (1) nach Anspruch 1,
**dadurch gekennzeichnet, dass** Segmente (2, 3, 4, 5, 6, 7; 8; 9) benachbarter Trägerblechlamellen (1a, 1b), insbesondere durch einen Schweißpunkt oder eine Rollenschweißnaht, miteinander verschweißt sind.

4. Segmentiertes Trägerblech (1) nach Anspruch 1,
**dadurch gekennzeichnet, dass** Segmente (2, 3, 9, 5, 6, 7; 8, 9) benachbarter Trägerblechlamellen (1a, 1b) mittels stirnseitiger formkomplementärer Vorsprünge und Ausnehmungen, insbesondere, vorzugsweise radial verlaufender, Stege und Nuten miteinander verbunden sind.

5. Segmentiertes Trägerblech (1) nach Anspruch 1,
**dadurch gekennzeichnet, dass** Segmente (2, 3, 4, 5, 6, 7; 8, 9) benachbarter Trägerblechlamellen (1a, 1b) mittels Nieten und/oder mittels Reibschluss und/oder Formschluss erzeugender Mittel drehfest miteinander verbunden sind.

6. Segmentiertes Trägerblech (1) nach einem der vorangegangenen Ansprüche,
**dadurch gekennzeichnet dass** benachbarte Segmente (2, 3, 4, 5, 6, 7; 8, 9) einer jeweiligen Trägerblechlamelle (1a, 1b) endseitig formkomplementäre Ausnehmungen (10, 12) und Vorsprünge (11, 13) aufweisen.

7. Segmentiertes Trägerblech (1) nach einem der vorangegangenen Ansprüche,
**dadurch gekennzeichnet, dass** die jeweiligen Trägerblechlamellen (1a, 1b) eine korrespondierende Außen- oder Innenverzahnung (14) aufweisen.

8. Lamelle mit segmentiertem Trägerblech (1) nach einem der vorangegangenen Ansprüche.

9. Lamelle nach Anspruch 8,
**dadurch gekennzeichnet, dass** auf einer Ringfläche (17, 18) oder auf beiden Ringflächen (17, 18) ein Reibbelag, insbesondere aus einem Fasermaterial, vorgesehen ist.

10. Lamelle nach Anspruch 9,
**dadurch gekennzeichnet, dass** der Reibbelag segmentiert oder als Vollring ausgebildet ist.

11. Verfahren zur Herstellung eines segmentierten Trägerbleches (1) nach einem der Ansprüche 1 bis 7,
**dadurch gekennzeichnet, dass** in einem ersten Schritt ein metallisches Kaltband einseitig oder beidseitig mit einem elastischen Kleber versehen wird, dass in einem zweiten Schritt, vorzugsweise identische, Segmente (2, 3, 4, 5, 6, 7; 8, 9) für Trägerblechlamellen (1a 1b) aus dem metallischen Kaltband ausgestanzt werden und dass in einem dritten Schritt aus den ausgestanzten Segmenten (2, 3, 4, 5, 6, 7; 8, 9) eine erste Trägerblechlamelle (1a, 1b) zusammengefügt wird und dass in einem vierten Schritt auf einer der Ringflächen der ersten Trägerblechlamelle (1a, 1b), vorzugsweise um eine halbe Segmentteilung, versetzt aus den ausgestanzten Segmenten (2, 3, 4, 5, 6, 7; 8, 9) eine zweite Trägerblechlamelle (1a, 1b) zusammengefügt wird und dass ggf. weitere auf einer der freien Ringflächen der zusammengefügten Trägerblechlamellen (1a, 1b), vorzugsweise um eine halbe Segmentteilung, versetzt aus den ausgestanzten Segmenten (2, 3, 4, 5, 6, 7; 8, 9) weitere Trägerblechlamellen (1a, 1b) zusammengefügt werden und dass die Trägerblechlamellen (1a, 1b) in einem fünften Schritt in einem Bonding Prozess verklebt werden.

12. Verfahren zur Herstellung einer Lamelle nach einem der Ansprüche 8 bis 10,
**dadurch gekennzeichnet, dass** in einem ersten Schritt ein metallisches Kaltband einseitig oder beidseitig mit einem elastischen Kleber versehen wird, dass in einem zweiten Schritt, vorzugsweise identische, Segmente (2, 3, 4, 5, 6, 7; 8, 9) für Trägerblechlamellen (1a, 1b) aus dem metallischen Kaltband ausgestanzt werden und dass in einem dritten Schritt aus den ausgestanzten Segmenten (2, 3, 4, 5, 6, 7; 8, 9) eine erste Trägerblechlamelle (1a, 1b) zusammengefügt wird und dass in einem vierten Schritt auf einer der Ringflächen der ersten Trägerblechlamelle (1a, 1b), vorzugsweise um eine halbe Segmentteilung, versetzt aus den ausgestanzten Segmenten (2, 3, 4, 5, 6, 7; 8, 9) eine zweite Trägerblechlamelle (1a, 1b) zusammengefügt wird und dass ggf. weitere auf einer der freien Ringflächen der zusammengefügten Trägerblechlamellen (1a, 1b) vorzugsweise um eine halbe Segmentteilung, versetzt aus den ausgestanzten Segmenten (2, 3, 4, 5, 6, 7; 8, 9) weitere Trägerblechlamellen (1a, 1b) zusammengefügt werden und dass ggf, auf einner oder beiden freien Ringflächen ein ggf. ebenfalls segmentierter Reibbelag angeordnet wird und dass die Trägerblechlamellen (1a, 1b) und ggf. der oder die Reibbeläge in einem fünften Schritt in einem Bonding Prozess miteinander gefügt werden.

13. Verfahren zur Herstellung einer Lamelle nach einem der Ansprüche 8 bis 10,
**dadurch gekennzeichnet, dass** die einzelnen Segmente (2, 3, 4, 5, 6, 7; 8, 9) miteinander verschweißt oder vernietet werden.

14. Verfahren zur Herstellung eines Trägerblechs nach einem der Ansprüche 1 bis 8,
**dadurch gekennzeichnet, dass** die einzelnen Segmente (2, 3, 4, 5, 6,, 7; 8, 9) miteinander verschweißt oder vernietet werden.

## Claims

1. Segmented mounting plate (1) for a disc, **characterized in that** the mounting plate (1) is formed from a plurality of segmented mounting plate discs (1a, 1b), in particular two segmented mounting plate discs (1a, 1b), wherein segments (2, 3, 4, 5, 6, 7; 8, 9) of adjacent mounting plate discs (1a, 1b) are arranged offset from one another, wherein adjacent mounting plate discs (1a, 1b) are connected to one another in a rotationally fixed manner, and wherein the respective mounting plate discs (1a, 1b) have an external or internal tooth system (14).

2. Segmented mounting plate (1) according to Claim 1, **characterized in that** segments (2, 3, 4, 5, 6, 7; 8, 9) of adjacent mounting plate discs (1a, 1b) are adhesively bonded to one another.

3. Segmented mounting plate (1) according to Claim 1, **characterized in that** segments (2, 3, 4, 5, 6, 7; 8, 9) of adjacent mounting plate discs (1a, 1b) are welded to one another, in particular by a weld spot or a roller seam weld.

4. Segmented mounting plate (1) according to Claim 1, **characterized in that** segments (2, 3, 4, 5, 6, 7; 8, 9) of adjacent mounting plate discs (1a, 1b) are connected to one another by means of end-face projections and recesses having complementary shapes, in particular, preferably radially running, webs and grooves.

5. Segmented mounting plate (1) according to Claim 1, **characterized in that** segments (2, 3, 4, 5, 6, 7; 8, 9) of adjacent mounting plate discs (1a, 1b) are connected to one another in a rotationally fixed manner by means of rivets and/or by means which produce a friction grip and/or a form fit.

6. Segmented mounting plate (1) according to one of the preceding claims, **characterized in that** adjacent segments (2, 3, 4, 5, 6, 7; 8, 9) of a respective mounting plate disc (1a, 1b) have, at the ends, recesses (10, 12) and projections (11, 13) having complementary shapes.

7. Segmented mounting plate (1) according to one of the preceding claims, **characterized in that** the respective mounting plate discs (1a, 1b) have a corresponding external or internal tooth system (14).

8. Disc having a segmented mounting plate (1) according to one of the preceding claims.

9. Disc according to Claim 8, **characterized in that** a friction lining, in particular made of a fibre material, is provided on one annular surface (17, 18) or on both annular surfaces (17, 18).

10. Disc according to Claim 9, **characterized in that** the friction lining is segmented or is designed as a solid ring.

11. Method of producing a segmented mounting plate (1) according to one of claims 1 to 7, **characterized in that**, in a first step, a metallic cold rolled strip is provided with an elastic adhesive on one side or both sides, **in that**, in a second step, preferably identical segments (2, 3, 4, 5, 6, 7; 8, 9) for mounting plate discs (1a, 1b) are punched out of the metallic cold rolled strip, and **in that**, in a third step, a first mounting plate disc (1a, 1b) is assembled from the punched-out segments (2, 3, 4, 5, 6, 7; 8, 9), and **in that**, in a fourth step, a second mounting plate disc (1a, 1b) is assembled from the punched-out segments (2, 3, 4, 5, 6, 7; 8, 9) on one of the annular surfaces of the first mounting plate disc (1a, 1b) in such a way as to be offset, preferably by half a segment division, and **in that**, if need be, further mounting plate discs (1a, 1b) are assembled from the punched-out segments (2, 3, 4, 5, 6, 7; 8, 9) on one of the free annular surfaces of the assembled mounting plate discs (1a, 1b) in such a way as to be offset, preferably by half a segment division, and **in that** the mounting plate discs (1a, 1b) are adhesively bonded in a bonding process in a fifth step.

12. Method of producing a disc according to one of Claims 8 to 10, **characterized in that**, in a first step, a metallic cold rolled strip is provided with an elastic adhesive on one side or both sides, **in that**, in a second step, preferably identical segments (2, 3, 4, 5, 6, 7; 8, 9) for mounting plate discs (1a, 1b) are punched out of the metallic cold rolled strip, and **in that**, in a third step, a first mounting plate disc (1a, 1b) is assembled from the punched-out segments (2, 3, 4, 5, 6, 7; 8, 9), and **in that**, in a fourth step, a second mounting plate disc (1a, 1b) is assembled from the punched-out segments (2, 3, 4, 5, 6, 7; 8, 9) on one of the annular surfaces of the first mounting plate disc (1a, 1b) in such a way as to be offset, preferably by half a segment division, and **in that**, if need be, further mounting plate discs (1a, 1b) are assembled from the punched-out segments (2, 3, 4, 5, 6, 7; 8, 9) on one of the free annular surfaces of the assembled mounting plate discs (1a, 1b) in such a way as to be offset, preferably by half a segment division, and **in that**, if need be, a possibly likewise segmented friction lining is arranged on one or both free annular surfaces, and **in that** the mounting plate discs (1a, 1b) and, if need be, the friction lining or linings are joined together in a bonding process in a fifth step.

13. Method of producing a disc according to one of Claims 8 to 10, **characterized in that** the individual segments (2, 3, 4, 5, 6, 7; 8, 9) are welded or riveted to one another.

14. Method of producing a mounting plate according to one of Claims 1 to 8, **characterized in that** the individual segments (2, 3, 4, 5, 6, 7; 8, 9) are welded or riveted to one another.

## Revendications

1. Dispositif de fixation segmenté (1) pour un disque d'embrayage, **caractérisé en ce que** le dispositif de fixation (1) est formé de plusieurs, en particulier deux, lames de dispositif de fixation segmentées (1a, 1b), dans lequel des segments (2, 3, 4, 5, 6, 7; 8, 9) de lames de dispositif de fixation voisines (1a, 1b) sont décalés l'un par rapport à l'autre, dans lequel des lames de dispositif de fixation adjacentes l'une à l'autre (1a, 1b) sont assemblées l'une à l'autre de façon solidaire en rotation, et dans lequel les lames de dispositif de fixation respectives (1a, 1b) présentent une denture extérieure ou une denture intérieure (14).

2. Dispositif de fixation segmenté (1) selon la revendication 1, **caractérisé en ce que** des segments (2, 3, 4, 5, 6, 7; 8, 9) de lames de dispositif de fixation voisines (1a, 1b) sont collés l'un à l'autre.

3. Dispositif de fixation segmenté (1) selon la revendication 1, **caractérisé en ce que** des segments (2, 3, 4, 5, 6, 7; 8, 9) de lames de dispositif de fixation voisines (1a, 1b) sont soudés l'un à l'autre, en particulier par un point de soudure ou un cordon de soudure à la molette.

4. Dispositif de fixation segmenté (1) selon la revendication 1, **caractérisé en ce que** des segments (2, 3, 4, 5, 6, 7; 8, 9) de lames de dispositif de fixation voisines (1a, 1b) sont assemblés l'un à l'autre au moyen de saillies et de cavités frontales de forme complémentaire, en particulier de nervures et de rainures orientées de préférence radialement.

5. Dispositif de fixation segmenté (1) selon la revendication 1, **caractérisé en ce que** des segments (2, 3, 4, 5, 6, 7; 8, 9) de lames de dispositif de fixation voisines (1a, 1b) sont assemblés l'un à l'autre de façon solidaire en rotation au moyen de rivets et/ou par des moyens produisant un assemblage à friction et/ou un assemblage par emboîtement.

6. Dispositif de fixation segmenté (1) selon l'une quelconque des revendications précédentes, **caractérisé en ce que** des segments voisins (2, 3, 4, 5, 6, 7; 8, 9) d'une lame de dispositif de fixation respective (1a, 1b) présentent du côté des extrémités des cavités (10, 12) et des saillies (11, 13) de forme complémentaire.

7. Dispositif de fixation segmenté (1) selon l'une quelconque des revendications précédentes, **caractérisé en ce que** les lames de dispositif de fixation respectives (1a, 1b) présentent une denture extérieure ou une denture intérieure correspondante (14).

8. Disque d'embrayage avec un dispositif de fixation segmenté (1) selon l'une quelconque des revendications précédentes.

9. Disque d'embrayage selon la revendication 8,
**caractérisé en ce qu'**il est prévu une garniture de friction, en particulier en un matériau fibreux, sur une surface annulaire (17, 18) ou sur les deux surfaces annulaires (17, 18).

10. Disque d'embrayage selon la revendication 9, **caractérisé en ce que** la garniture de friction est segmentée ou forme un anneau complet.

11. Procédé de fabrication d'un dispositif de fixation segmenté (1) selon l'une quelconque des revendications 1 à 7, **caractérisé en ce que** dans une première étape on enduit une bande métallique à froid avec un adhésif élastique sur une face ou sur les deux faces, dans une deuxième étape on découpe dans la bande métallique à froid des segments (2, 3, 4, 5, 6, 7; 8, 9), de préférence identiques, pour des lames de dispositif de fixation (1a, 1b), dans une troisième étape on assemble une première lame de dispositif de fixation (1a, 1b) à partir des segments découpés (2, 3, 4, 5, 6, 7; 8, 9) et dans une quatrième étape on assemble une deuxième lame de dispositif de fixation (1a, 1b) à partir des segments découpés (2, 3, 4, 5, 6, 7; 8, 9) sur une des surfaces annulaires de la première lame de dispositif de fixation (1a, 1b), de préférence avec un décalage de la moitié du pas des segments et on assemble éventuellement d'autres lames de dispositif de fixation (1a, 1b) à partir des segments découpés (2, 3, 4, 5, 6, 7; 8, 9) sur une des surfaces annulaires libres des lames de dispositif de fixation assemblées (1a, 1b), de préférence avec un décalage de la moitié du pas des segments, et **en ce que** dans une cinquième étape on colle les lames de dispositif de fixation (1a, 1b) dans un procédé de liaison.

12. Procédé de fabrication d'un disque d'embrayage selon l'une quelconque des revendications 8 à 10, **caractérisé en ce que** dans une première étape on enduit une bande métallique à froid avec un adhésif élastique sur une face ou sur les deux faces, dans une deuxième étape on découpe dans la bande métallique à froid des segments (2, 3, 4, 5, 6, 7; 8, 9), de préférence identiques, pour des lames de dispositif de fixation (1a, 1b), dans une troisième étape on assemble une première lame de dispositif de fixation (1a, 1b) à partir des segments découpés (2, 3, 4, 5, 6, 7; 8, 9) et dans une quatrième étape on assemble une deuxième lame de dispositif de fixation (1a, 1b) à partir des segments découpés (2, 3, 4, 5, 6, 7; 8, 9) sur une des surfaces annulaires de la première lame de dispositif de fixation (1a, 1b), de préférence avec un décalage de la moitié du pas des segments et on assemble éventuellement d'autres lames de dispositif de fixation (1a, 1b) à partir des segments découpés (2, 3, 4, 5, 6, 7; 8, 9) sur une des surfaces annulaires libres des lames de dispositif de fixation assemblées (1a, 1b), de préférence avec un décalage de la moitié du pas des segments, **en ce qu'**on dispose éventuellement sur une ou sur les deux faces annulaires libres une garniture de friction éventuellement segmentée également, et **en ce que** dans une cinquième étape on assemble les lames de dispositif de fixation (1a, 1b) et éventuellement la ou les garnitures de friction l'une à l'autre dans un procédé de liaison.

13. Procédé de fabrication d'un disque d'embrayage selon l'une quelconque des revendications 8 à 10, **caractérisé en ce que** l'on soude ou l'on rive les uns aux autres les segments individuels (2, 3, 4, 5, 6, 7; 8, 9).

14. Procédé de fabrication d'un dispositif de support selon l'une quelconque des revendications 1 à 8, **caractérisé en ce que** l'on soude ou on rive les uns aux autres les segments individuels (2, 3, 4, 5, 6, 7; 8, 9).
